# EUROPÄISCHE PATENTSCHRIFT

(11) **EP 3 646 438 B1**
(45) Veröffentlichungstag und Bekanntmachung des Hinweises auf die Patenterteilung: **03.11.2021**
(21) Anmeldenummer: 18731730.0
(22) Anmeldetag: 25.05.2018
(51) Int. Cl.: H02K 1/28, H02K 1/30, H02K 1/27, H02K 21/02, H02P 9/40, H02P 9/48, H02K 21/16

(54) **PERMANENTMAGNET-ERREGTER MOTOR MIT VERDREHBAREN MAGNETSTÄBEN**
PERMANENT MAGNET ENERGIZED MOTOR WITH ROTATABLE BAR MAGNETS
MOTEUR À EXCITATION PAR AIMANTS PERMANENTS, DOTÉ DE TIGES MAGNÉTIQUES ROTATIVES

(30) Priorität: 27.06.2017 DE 102017114245
(43) Veröffentlichungstag der Anmeldung: 06.05.2020
(73) Patentinhaber: Schaeffler Technologies AG & Co. KG, 91074 Herzogenaurach (DE)
(72) Erfinder: ANGRICK, Carsten, 77767 Appenweier (DE); REIK, Wolfgang, 77815 Bühl (DE); GRAMANN, Matthias, 77871 Renchen (DE); SCHWANEMANN, Peter, 77815 Bühl (DE); ENGLER, Miriam, 73344 Gruibingen (DE)
(86) Internationale Anmeldenummer: PCT/DE2018/100511
(87) Internationale Veröffentlichungsnummer: WO 2019/001623

(56) Entgegenhaltungen:
- EP-A1- 2 148 407
- WO-A1-03/044927
- WO-A1-2011/048464
- WO-A2-2011/053472
- WO-A2-2011/053473
- CH-A- 196 443
- GB-A- 495 813
- JP-A- 2002 315 244
- JP-A- 2004 336 915
- JP-A- 2011 015 476
- JP-B2- 4 823 821
- US-A- 3 360 667
- US-A1- 2011 101 811
- US-A1- 2012 074 913

## Beschreibung

Die Erfindung betrifft einen Rotor einer elektrischen Maschine, sowie eine elektrische Maschine mit einem Rotor und einem Stator, der den Rotor umgibt.

Die Auslegung von beispielsweise E-Motoren bzw. einer elektrischen Maschine ist immer ein Kompromiss aus verschiedenen Anforderungen. Insbesondere bei permanentmagnet-erregten Motoren ist das Magnetfeld des Rotors, durch dessen Design im Betrieb, nicht veränderlich und kann somit nicht betriebspunkt-optimal eingestellt werden, wie beispielsweise bei einer strom-erregten Synchronmaschine.

Aus jeder der JP 2011 015 476 A, der JP 2002 315 244 A, der WO 2011/053473 A2 und der US 2012/074913 A1 ist ein Rotor gemäß dem Oberbegriff des Anspruchs 1 bekannt.

Bezüglich weiteren Standes der Technik wird auf die JP 4 823821 B2 verwiesen.

Daher ist es Aufgabe der vorliegenden Erfindung, einen Rotor einer elektrischen Maschine sowie eine elektrische Maschine mit einem Rotor und einem Stator anzugeben, welcher / welche eine Umschaltmöglichkeit, insbesondere in einem Rotor, einer vorzugsweise permanentmagnet-erregten elektrischen Maschine realisiert, um den magnetischen Rotorfluss betriebspunkt-optimal einstellen zu können.

Diese Aufgabe wird erfindungsgemäß durch die Merkmale der unabhängigen Patentansprüche gelöst. Weitere vorteilhafte Weiterbildungen sind Gegenstand der Unteransprüche.

Bei einem ersten Aspekt umfasst ein Rotor einer elektrischen Maschine:
einen Rotorkörper,
eine Drehachse, welche sich in axiale Richtung erstreckt und um welche der Rotor bzw. der Rotorkörper drehbar ist,
eine äußere Mantelfläche, die vorzugsweise den Rotorkörper begrenzt, und
mindestens eine Polanordnung.

Günstigerweise handelt es sich um einen Rotor einer als Innenläufer oder als Außenläufer ausgebildeten elektrischen Maschine.

Vorzugsweise ist die mindestens eine Polanordnung an oder innerhalb des Rotorkörpers angeordnet. Somit bewegt sich bzw. dreht sich die mindestens eine Polanordnung mit dem Rotorkörper, sodass günstigerweise beide zusammen eine Drehung um die Drehachse des Rotors vollführen.

Der Rotor, insbesondere der Rotorkörper, umfasst einen Bewegungsmechanismus für die mindestens eine Polanordnung.

Der Bewegungsmechanismus ist derart ausgebildet, dass die mindestens eine Polanordnung bewegbar um eine Rotationsachse ist, die im Wesentlichen parallel zur Drehachse des Rotors orientiert ist. Dadurch ist die mindestens eine Polanordnung zusätzlich zur Rotation um die Drehachse des Rotors auch um ihre Rotationsachse bewegbar. Mit anderen Worten ausgedrückt, kann mithilfe des Bewegungsmechanismus eine Bewegung der mindestens einen Polanordnung relativ zum Rotorkörper realisiert werden, wodurch im Ergebnis eine relative Positionierung von der mindestens einen Polanordnung und dem Rotorkörper möglich ist.

Unter im Wesentlichen parallel wird vorzugsweise in der vorliegenden Beschreibung verstanden, dass die Rotationsachse der mindestens einen Polanordnung innerhalb eines Zylinders vom Durchmesser 0,05 10 mm liegt, der parallel zur Drehachse des Rotors angeordnet ist.

Auch ist es von Vorteil, wenn unter im Wesentlichen parallel in der vorliegenden Beschreibung verstanden wird, dass die Drehachse des Rotors innerhalb eines Zylinders vom Durchmesser 0,05 10 mm liegt, der parallel zur Rotationsachse der mindestens einen Polanordnung angeordnet ist.

Ferner ist es bevorzugt, dass der Bewegungsmechanismus einen Aktuator zum Bewegen der mindestens einen Polanordnung umfasst.

Günstigerweise umfasst der Bewegungsmechanismus einen hydraulisch oder pneumatisch betreibbaren Aktuator oder einen elektrischen Aktuator, insbesondere einen elektrischen Motor. Somit kann die mindestens eine Polanordnung auf einfache Weise relativ zum Rotorkörper bewegt werden.

Auch ist es günstig, wenn der Bewegungsmechanismus mindestens eine Arretierung für die mindestens eine Polanordnung aufweist. Somit kann die relative Position der mindestens einen Polanordnung zum Rotorkörper einfach begrenzt bzw. fixiert bzw. festgestellt werden.

Vorzugsweise ist die mindestens eine Arretierung ähnlich einer Außenbackenbremse ausgebildet, die günstigerweise von außen auf die mindestens eine Polanordnung einwirkt, um deren Bewegung zu limitieren.

Ferner ist es von Vorteil, wenn die mindestens eine Arretierung diverse Stellpositionen umfasst. Somit sind diverse relative Positionen zwischen der mindestens einen Polanordnung und dem Rotorkörper realisierbar. Bei den Stellpositionen handelt es sich vorzugsweise um vorbestimmbare Positionen der mindestens einen Polanordnung relativ zum Rotorkörper.

Auch ist es günstig, wenn die mindestens eine Arretierung wenigstens eine erste und eine zweite Stellposition umfasst. Auf diese Weise können zumindest zwei unterschiedliche relative Positionen zwischen Rotorkörper und Polanordnung realisiert werden.

Vorzugsweise ist in einer Stellposition der Abstand zwischen einem ersten Polkörperelement einer Polanordnung zur äußeren Mantelfläche geringer, als der Abstand zwischen einem zweiten Polkörperelement der Polanordnung zur äußeren Mantelfläche. In diesem Zusammenhang ist es von Vorteil, wenn sich die mindestens eine Polanordnung aus dem ersten Polkörperelement, das vorzugsweise einen magnetischen Nord- oder Südpol aufweist, und dem zweiten Polkörperelement, das vorzugsweise einen magnetischen Süd- oder Nordpol aufweist, zusammensetzt.

Unter Abstand wird vorzugsweise in der vorliegenden Beschreibung die kürzeste Verbindung bzw. Verbindungslinie zwischen der Mantelfläche des Rotors bzw. dessen Rotorkörper und einem Polkörperelement oder der mindestens einen Polanordnung verstanden. Hierbei ist es günstig, wenn die kürzeste Verbindungslinie sich in radialer Richtung erstreckt.

Des Weiteren kann vorgesehen sein, dass der Bewegungsmechanismus zwischen der Drehachse des Rotors bzw. des Rotorkörpers und der mindestens einen Polanordnung angeordnet ist, die vorzugsweise von der Drehachse in radialer Richtung beabstandet ist. Somit kann die Zentripetalbeschleunigung auf den Bewegungsmechanismus geringgehalten werden.

Vorzugsweise ist der Bewegungsmechanismus zwischen der äußeren Mantelfläche des Rotorkörpers und der mindestens einen Polanordnung angeordnet, die vorzugsweise von der äußeren Mantelfläche in radialer Richtung beabstandet ist. Diese Anordnung erlaubt es die Zentripetalbeschleunigung für den Bewegungsmechanismus zu nutzen, um diesen beispielsweise mit Energie zu versorgen, sodass dieser die mindestens eine Polanordnung von einer Stellposition in eine andere Stellposition verfahren bzw. bringen kann.

Auch ist es von Vorteil, wenn der Bewegungsmechanismus hohlzylindrisch ausgebildet ist, um die mindestens eine Polanordnung in seinem Inneren aufzunehmen. Mit anderen Worten ausgedrückt, ist es günstig, wenn der Bewegungsmechanismus als Bohrung oder als Aufnahme oder dergleichen innerhalb des Rotorkörpers ausgebildet ist, sodass innerhalb der Bohrung/Aufnahme die mindestens eine Polanordnung anordenbar ist.

Anders ausgedrückt, ist es günstig, wenn der Rotorkörper eine Bohrung pro Polanordnung umfasst, die zumindest teilweise den Bewegungsmechanismus bildet.

Bevorzugterweise umfasst der Bewegungsmechanismus eine eigene Drehachse, insbesondere eine Rotationsachse. Die Rotationsachse ist vorzugsweise eine Achse, zu welcher der Bewegungsmechanismus rotationssymmetrisch ausgebildet ist.

Nochmals mit anderen Worten ausgedrückt, ist es bevorzugt, dass der Bewegungsmechanismus symmetrisch, insbesondere rotationssymmetrisch, zu seiner Rotationsachse ausgebildet ist. Auf diese Weise kann z. B. eine Polanordnung mithilfe des Bewegungsmechanismus rotiert werden.

Günstigerweise umfasst der Bewegungsmechanismus eine Lagereinheit, mit welcher die mindestens eine Polanordnung frei drehbar ist. Anders ausgedrückt, ist es bevorzugt, wenn der Bewegungsmechanismus ein Wälzlager oder ein Gleitlager umfasst, das eine Drehung der mindestens einen Polanordnung, vorzugsweise angebracht an bzw. innerhalb des Bewegungsmechanismus, gewährleistet.

Nochmals mit anderen Worten ausgedrückt, ist es von Vorteil, wenn die mindestens eine Polanordnung bzw. deren Polkörperelement voll variabel verdreht werden können, sodass eine kontinuierliche Regelung ermöglicht werden kann. Somit ist es möglich, die mindestens eine Polanordnung bzw. Polkörperelement entweder alle gleichzeitig oder individuell oder in Gruppen zu verdrehen. Die Verdrehung kann also entweder diskret (also z. B. in genau zwei Positionen) oder kontinuierlich einstellbar oder aber in definierten Zwischenstufen erfolgen. Eine möglichst hohe Flexibilität ermöglicht eine entsprechend bessere Regelbarkeit, erfordert aber auch eine entsprechende Aktuierung.

Des Weiteren ist es günstig, wenn der Bewegungsmechanismus eine Lagereinheit umfasst, in welcher mindestens ein magnetisches und/oder ein magnetisierbares und/oder nicht-magnetisches Polkörperelement der mindestens einen Polanordnung drehbar aufnehmbar ist. Somit kann also die mindestens eine Polanordnung, bestehend aus mindestens einem Polkörperelement, sich relativ zum Rotorkörper drehen.

Ferner ist es bevorzugt, dass die mindestens eine Polanordnung einen magnetischen und/oder magnetisierbaren Pol umfasst. Somit kann die mindestens eine Polanordnung magnetisch ausgebildet sein.

Vorzugsweise umfasst die mindestens eine Polanordnung einen ersten Pol und/oder einen zweiten Pol. Bei den Polen handelt es sich günstigerweise um magnetische Pole.

Günstigerweise umfasst die mindestens eine Polanordnung mindestens ein magnetisches, insbesondere einen Permanentmagneten, und/oder ein magnetisierbares und/oder ein nicht-magnetisches Polkörperelement.

Vorteilhafterweise bildet mindestens ein Polkörperelement eine Polanordnung.

Auch ist es von Vorteil, wenn das mindestens eine magnetische und/oder magnetisierbare Polkörperelement quaderförmig, vorzugsweise stabförmig, ausgebildet ist.

Vorzugsweise ist die mindestens eine Polanordnung als drehbarer Stab ausgebildet.

Auch ist es günstig, wenn mehrere Polkörperelemente hintereinander in Reihe bzw. stabförmig die mindestens eine Polanordnung bilden.

Auch ist es von Vorteil, wenn mehrere Polkörperelemente zusammen eine Querschnittsform bzw. -fläche der mindestens einen Polanordnung bilden.

Bevorzugterweise umfasst die mindestens eine Polanordnung eine kreisförmige Querschnittsfläche.

Auch ist es von Vorteil, wenn die mindestens eine Polanordnung aus mindestens zwei Polkörperelementen gebildet wird, die vorzugsweise hälftig die Gestalt der mindestens einen Polanordnung, insbesondere im Querschnitt und/oder Längsschnitt, bilden.

Des Weiteren ist es günstig, wenn die mindestens eine Polanordnung eine symmetrisch ausgebildete Gestalt aufweist, deren geometrischer Schwerpunkt und deren Massenschwerpunkt zusammenfallen, um eine Drehung um eine Rotationsachse zu ermöglichen.

Erfindungsgemäß umfasst die mindestens eine Polanordnung eine Rotationsachse die im Wesentlichen parallel zur Drehachse ausgerichtet ist.

Erfindungsgemäß bilden mindestens drei Polanordnungen eine V-förmige Anordnung oder eine Speichenanordnung.

Erfindungsgemäß weisen die mindestens drei Polanordnungen unterschiedliche Abstände zur äußeren Mantelfläche des Rotors bzw. des Rotorkörpers auf, wobei lediglich die beiden Polanordnungen mit dem geringsten Abstand zur äußeren Mantelfläche um ihre Rotationsachse bewegbar sind. Somit kann die Zahl der Polanordnungen sowie der technische Aufwand zur Realisierung eines Bewegungsmechanismus reduziert werden.

Auch kann vorgesehen sein, dass der Rotor bzw. dessen Rotorkörper mindestens eine magnetische Flusssperre umfasst. Diese kann den magnetischen Fluss sperren, um magnetische Streuflüsse zu reduzieren.

Vorzugweise ist die mindestens eine magnetische Flusssperre zwischen zwei Polanordnungen angeordnet.

Günstigerweise erstreckt sich die mindestens eine magnetische Flusssperre in radialer Richtung und/oder in Umfangsrichtung.

Die mindestens eine magnetische Flusssperre ist günstigerweise als Luftspalt oder als Kunststoffteil ausgebildet.

Ein zweiter Aspekt umfasst eine elektrische Maschine mit einem Rotor und einem Stator.

Es wird ausdrücklich darauf hingewiesen, dass die Merkmale des Rotors, wie sie unter dem ersten Aspekt erwähnt werden, einzeln oder miteinander kombinierbar bei der elektrischen Maschine Anwendung finden können.

Anders ausgedrückt, die oben unter dem ersten Aspekt der Erfindung genannten Merkmale betreffend den Rotor können auch hier unter dem zweiten Aspekt der Erfindung mit weiteren Merkmalen kombiniert werden.

Vorteilhaftweise umfasst die elektrische Maschine einen Rotor mit Merkmalen nach dem ersten Aspekt, und einen Stator, der den Rotor umgibt.

Der Rotor und der Stator sind zueinander in radialer Richtung beabstandet, um einen Luftspalt zwischen beiden zu bilden.

Die elektrische Maschine umfasst eine Drehachse, um welche der Rotor drehbar ist, wobei der Rotor einen Rotorkörper und eine äußere Mantelfläche aufweist, die den Rotor bzw. dessen Rotorkörper begrenzt.

Der Rotor umfasst mindestens eine Polanordnung und einen Bewegungsmechanismus für die mindestens eine Polanordnung.

Die mindestens eine Polanordnung umfasst einen magnetischen oder magnetisierbaren Pol.

Der Bewegungsmechanismus ist derart ausgebildet, dass die mindestens eine Polanordnung um eine Rotationsachse des Bewegungsmechanismus bewegbar ist, die im Wesentlichen parallel zur Drehachse des Rotors orientiert ist. Dadurch ist der magnetische und/oder magnetisierbare Pol der Polanordnung relativ drehbar zum Stator und zum Rotor bzw. dessen Rotorkörper ausgebildet.

Ferner ist es von Vorteil, wenn der Stator mindestens eine Statorpolanordnung zum Erzeugen eines magnetischen Feldes umfasst.

Vorzugsweise weist der Bewegungsmechanismus mindestens eine Arretierung für die mindestens eine Polanordnung auf.

Auch ist es günstig, wenn die Arretierung wenigstens eine erste und eine zweite Stellposition umfasst, wobei vorzugsweise in der ersten Stellposition ein erster Pol der mindestens einen Polanordnung zum Stator orientiert ist.

Vorteilhafterweise ist in der zweiten Stellposition ein zweiter Pol der mindestens einen Polanordnung zum Stator orientiert.

Des Weiteren ist es bevorzugt, dass innerhalb eines bestimmbaren Zeitintervalls von der mindestens einen Statorpolanordnung ein elektro-magnetisches Gegenfeld zum elektro-magnetischen Feld der mindestens einen Polanordnung des Rotors generierbar ist. Auf diese Weise wird vorzugsweise nach Lösen der mindestens einen Arretierung in der ersten Stellposition ein Drehen der Polanordnung entsprechend der von den elektro-magnetischen Feldern erzeugten Kräften ermöglicht, wodurch die mindestens eine Polanordnung in die zweite Stellposition drehbar und anschließend arretierbar ist.

Nachfolgend wird der oben dargestellte Erfindungsgedanke ergänzend mit anderen Worten ausgedrückt.

Dieser Gedanke betrifft vorzugsweise vereinfacht dargestellt einen Rotor einer elektrischen Maschine mit einem Bewegungsmechanismus, der erfindungsgemäß derart ausgebildet ist, dass mindestens eine Polanordnung bewegbar um eine Rotationsachse ist, die im Wesentlichen parallel zur Drehachse des Rotors orientiert ist, wodurch die mindestens eine Polanordnung zusätzlich zur Rotation um die Drehachse des Rotors auch um ihre Rotationsachse bewegbar ist.

Dabei geht der Erfindungsgedanke vorzugsweise von der Aufgabe aus, eine Umschaltmöglichkeit in Rotoren von permanentmagnet-erregten Motoren zu schaffen, um den Rotorfluss betriebspunkt-optimal einstellen zu können.

Dadurch können günstigerweise die folgenden Ziele erreicht werden:
vorzugsweise eine Reduzierung der induzierten Spannung auf die zulässige Maximalspannung im Fehlerfall (kritisch bei Motoren die stark in Feldschwächung betrieben werden, z.B. in 48V Systemen);
vorzugsweise eine Reduzierung der Motorverluste durch Reduzierung des wirksamen Rotorflusses für den Betrieb der Motoren bei hohen Drehzahlen (somit ist geringerer Feldschwächstrom nötig, wodurch bevorzugterweise einerseits Kupferverluste reduziert werden, als auch weniger Blindleistungsbedarf in der Elektronik entsteht, andererseits vorzugsweise auch die Ummagnetisierungsverluste im Motorblech reduziert werden);
vorzugsweise ein Umschalten der Polpaarzahl im Betrieb (dies ermöglicht höhere Betriebsfrequenzen und verlustärmeren Betrieb).

Um oben genannte Ziele zu erreichen, ist es günstig, wenn Magnete bzw. Polanordnungen des Motors bzw. der elektrischen Maschine als drehbare Stäbe ausgeführt sind. Entsprechend können alle Magnete bzw. Polanordnungen individuell bedarfsgerecht durch Drehen ausgerichtet werden.

Die Ausrichtung erfolgt bevorzugterweise entweder durch entsprechende Ausprägung des Statorfeldes und/oder vorzugsweise durch eine mechanische Vorrichtung bzw. einen Bewegungsmechanismus.

Dabei werden bevorzugterweise die Magnete bzw. Polanordnungen bzw. deren Polkörperelemente als drehbare Stäbe aufgebaut. Es können entweder alle Magnete drehbar ausgeführt werden, oder aber auch nur eine bestimmte Anzahl an Magneten.

Im Falle einer V-Anordnung der Polanordnungen sind nur die Magnete bzw. die Polanordnungen in Luftspaltnähe drehbar ausgeführt.

Auch ist es bevorzugt, wenn die Magnetstäbe bzw. die Polanordnungen entweder komplett aus magnetischem Material bestehen, oder aber mehrteilig aufgebaut sind, wobei vorzugsweise ein Teil aus rechteck-förmigen Magneten besteht, ein Teil aus weichmagnetischem Werkstoff sowie ein Teil aus Luft und/oder nicht-magnetischem Material, wie z. B. Kunststoff, welcher dann als magnetische Flusssperre dienen kann. Dies hat den Vorteil das schon innerhalb der Polanordnung der magnetische Fluss optimal geführt werden kann, sowie Kurzschlüsse der Magnetfeldlinien (Streufluss) vermieden oder reduziert werden können.

Ferner ist es günstig, wenn die Magnetstäbe bzw. die Polanordnungen in einer Ausführung in beliebiger Menge nahe der Rotoroberfläche bzw. nahe der Mantelfläche des Rotors bzw. dessen Rotorkörpers verteilbar sind.

Diese Ausführung ähnelt dann vorzugsweise von der Funktionsweise einer Asynchronmaschine. Die Magnete bzw. Polanordnungen bzw. deren Polkörperelemente sind dann in der Lage, sich anhand eines angelegten Statorfeldes automatisch auszurichten. Somit entfällt vorzugsweise das Anlernen des Offsetwinkels eines Rotorlagegebersystems.

Des Weiteren können je nach Ansteuerung des Stators auch beliebige Polpaarzahlen generiert werden. Ferner können sich im Fehlerfall (Entfall der Ansteuerung) die Magnetstäbe selbst ausrichten und günstigerweise einen magnetischen Kurzschluss im Rotor generieren. Somit werden bevorzugterweise auch bei hohen Drehzahlen keine Spannungen mehr induziert und der Motor ist dauerhaft in einem sicheren Zustand.

Auch ist es von Vorteil, wenn die Magnetstäbe bzw. die Polkörperelemente bzw. die Polanordnungen derart orientiert sind, wie von permanentmagnet-erregten Motoren bekannt, z.B. in V-Anordnung. Auch hier kann die Orientierung der Magnetstäbe durch den Stator beeinflusst werden.

Alternativ ist es auch möglich, eine mechanische Vorrichtung bzw. einen Bewegungsmechanismus für die gezielte Verdrehung der Magnetstäbe bzw. Polanordnungen vorzusehen. Die Magnetstäbe können entweder alle gleichzeitig, oder individuell, oder in Gruppen verdreht werden.

Die Verdrehung kann entweder diskret (also in genau zwei Positionen) oder kontinuierlich einstellbar oder aber in definierten Zwischenstufen erfolgen. Eine möglichst hohe Flexibilität ermöglicht eine entsprechend bessere Regelbarkeit, erfordert aber auch eine entsprechend aufwendigere Aktuierung.

Bekanntermaßen kann das Verdrehen von Magneten innerhalb eines bestehenden Magnetfeldes sehr hohe Kräfte erfordern. Da eine Aktuierung zum Verdrehen der Stäbe bzw. der Polanordnungen innerhalb des Rotordurchmessers erfolgen sollte, muss darauf geachtet werden, diese Kräfte möglichst zu reduzieren.

In diesem Zusammenhang ist es günstig, wenn eine günstige Rotorstellung hinsichtlich des zu dem Zeitpunkt eingestellten Statorfeldes abgewartet wird; alternativ ist es auch möglich, gezielt ein Statorfeld zu generieren (zum Beispiel durch Überlagerung), welches die erforderlichen Verdrehkräfte reduzieren kann.

Auch ist es von Vorteil, wenn die Stäbe bzw. die Polanordnungen durch ein Statorfeld verdreht werden und dann mechanisch arretiert werden mithilfe z. B. einer Bremse.

Ferner ist es auch möglich, durch individuelle Ansteuerung asymmetrische Anordnungen zu erzeugen, zum Beispiel in Vorzugsrichtung.

Nachstehend wird die Erfindung anhand von Ausführungsbeispielen in Verbindung mit zugehörigen Zeichnungen näher erläutert. Hierbei zeigen schematisch:
- **Fig. 1**: eine Schnittansicht auf einen erfindungsgemäßen Rotor nach einem ersten Ausführungsbeispiel;
- **Fig. 2 bis** 4: eine Schnittansicht auf eine erfindungsgemäße elektrische Maschine nach einem ersten Ausführungsbeispiel;
- **Fig. 5**: eine Schnittansicht auf eine erfindungsgemäße elektrische Maschine nach einem zweiten Ausführungsbeispiel; und
- **Fig. 6 bis 8**: eine Schnittansicht auf eine erfindungsgemäße elektrische Maschine nach dem ersten Ausführungsbeispiel mit einem Rotor nach einem zweiten Ausführungsbeispiel.

In der nachfolgenden Beschreibung werden gleiche Bezugszeichen für gleiche Gegenstände verwendet.

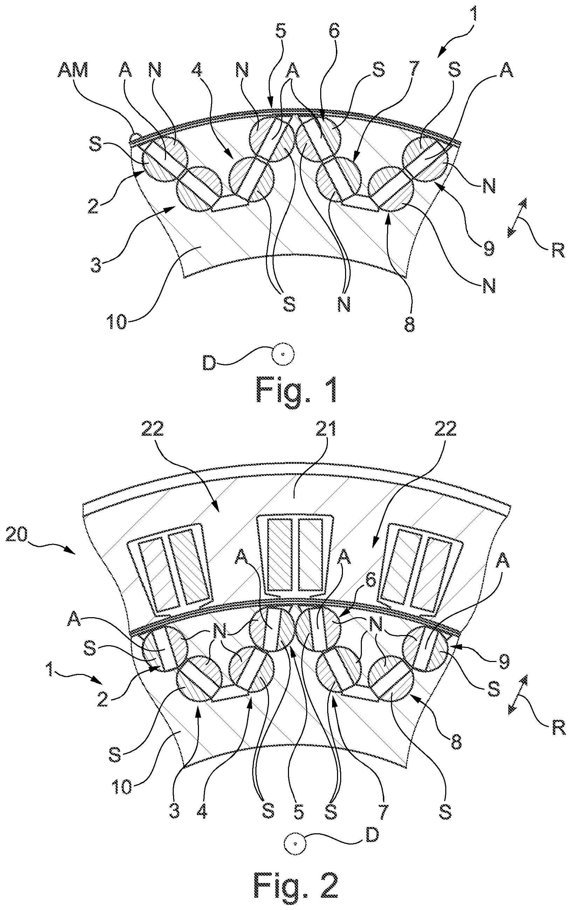

Figur 1 zeigt eine Schnittansicht auf einen erfindungsgemäßen Rotor 1 nach einem ersten Ausführungsbeispiel.

Genauer dargestellt zeigt Figur 1 einen Rotor 1 einer als Innenläufer ausgebildeten elektrischen Maschine 20.

Dabei hat der Rotor 1 einen Rotorkörper 10 und eine Drehachse D, welche sich in axiale Richtung erstreckt und um welche der Rotor 1 bzw. der Rotorkörper 10 drehbar ist.

Des Weiteren weist der Rotor 1 eine äußere Mantelfläche AM auf, die den Rotor 1 bzw. den Rotorkörper 10 begrenzt.

Ferner hat der Rotor 1 diverse Polanordnungen 2, 3, 4, 5, 6, 7, 8, 9, wobei jede Polanordnung 2 9 einen magnetischen Pol N, S bzw. einen ersten Pol N und einen zweiten Pol S hat.

Hierbei wird jede Polanordnung 2 9 bzw. jeder Pol der Polanordnungen 2 9 von einem magnetischen Polkörperelement bzw. einem Permanentmagneten gebildet.

Gemäß Figur 1 ist jede Polanordnung 2 9 bzw. deren Polkörperelemente stabförmig ausgebildet und hat eine kreisförmige Querschnittsfläche. Die Stabform erstreckt sich dabei in Richtung der Drehachse D.

Hierbei bilden jeweils zwei Polkörperelemente N, S eine Polanordnung 2 9, wobei die Polkörperelemente ca. hälftig die Gestalt einer Polanordnung 2 9 bilden.

Anders ausgedrückt, hat jede Polanordnung 2 9 eine symmetrisch ausgebildete Gestalt, deren geometrischer Schwerpunkt und deren Massenschwerpunkt zusammenfallen, um eine Drehung um eine Rotationsachse der jeweiligen Polanordnung zu ermöglichen.

Dabei ist die Rotationsachse A im Wesentlichen parallel zur Drehachse D ausgerichtet.

Die Polanordnungen 2 bis 5 und 6 bis 9 bilden jeweils eine V-förmige Anordnung, wobei die Polanordnungen 2/3 und 4/5 sowie 6/7 und 8/9 unterschiedliche Abstände zur äußeren Mantelfläche AM des Rotors 1 aufweisen.

So sind die Polanordnungen 2, 5, 6, 9 näher an der Mantelfläche AM als die Polanordnungen 3, 4, 7, 8.

Auch hat der Rotor 1 einen Bewegungsmechanismus für die Polanordnungen 2, 5, 6 und 9, wobei der Bewegungsmechanismus derart ausgebildet ist, dass die Polanordnungen 2, 5, 6 und 9 bewegbar um eine Rotationsachse A sind, die im Wesentlichen parallel zur Drehachse D des Rotors 1 orientiert ist. Dadurch sind Polanordnungen 2, 5, 6, 9 zusätzlich zur Rotation um die Drehachse D des Rotors 1 auch um ihre Rotationsachse A bewegbar bzw. rotierbar.

Nochmals mit anderen Worten ausgedrückt, sind lediglich die beiden Polanordnungen 2, 5 bzw. 6, 9 mit dem geringsten Abstand zur äußeren Mantelfläche AM um ihre Rotationsachse A bewegbar.

Zwar nicht konkret dargestellt, jedoch umfasst der Bewegungsmechanismus einen Aktuator zum Bewegen der Polanordnungen 2, 5, 6, 9, wobei der Bewegungsmechanismus einen hydraulisch oder pneumatisch betreibbaren Aktuator oder einen elektrischen Aktuator, insbesondere einen elektrischen Motor, umfassen kann.

Auch ist der Bewegungsmechanismus (nicht dargestellt) zwischen der Drehachse D und einer Polanordnung 2, 5, 6, 9 angeordnet, die von der Drehachse D in radialer Richtung R beabstandet ist. Dadurch kann die Zentripetalbeschleunigung auf den Bewegungsmechanismus geringgehalten werden, wodurch eine Betätigung des Aktuators eine geringere Kraft benötigt im Vergleich zu einer Anordnung des Bewegungsmechanismus zwischen der Mantelfläche AM und einer Polanordnung2, 5, 6, 9.

Auch ist der Bewegungsmechanismus hohlzylindrisch ausgebildet, um die Polanordnungen 2, 5, 6, 9 in seinem Inneren aufzunehmen.

Dabei verfügt der Bewegungsmechanismus um eine eigene Drehachse bzw. eine Rotationsachse, wobei der Bewegungsmechanismus rotationssymmetrisch zu seiner Rotationsachse A ausgebildet ist.

Konkret dargestellt, weist der Bewegungsmechanismus eine Lagereinheit auf, mit welcher die Polanordnungen 2, 5, 6, 9 frei drehbar sind. Bei der Lagereinheit kann es sich um ein Wälzlager handeln, das die magnetischen Polkörperelemente der Polanordnungen 2, 5, 6, 9 drehbar aufnimmt.

Frei drehbar ist in diesem Zusammenhang derart zu verstehen, dass die Polanordnungen 2, 5, 6, 9 bzw. deren Polkörperelemente voll variabel verdreht werden können, sodass eine kontinuierliche Regelung des Rotors 1 bzw. einer elektrischen Maschine 20 ermöglicht werden kann.

Auch ist es möglich, die Polanordnungen 2, 5, 6, 9 bzw. deren Polkörperelemente entweder alle gleichzeitig oder individuell oder in Gruppen zu verdrehen. Die Verdrehung kann also entweder diskret (also z. B. in genau zwei Positionen) oder kontinuierlich eingestellt werden oder aber in definierten Zwischenstufen erfolgen. Eine möglichst hohe Flexibilität ermöglicht eine entsprechend bessere Regelbarkeit, erfordert aber auch eine entsprechende Aktuierung.

Alternativ zum Aktuator kann der Bewegungsmechanismus eine Arretierung (nicht dargestellt) pro Polanordnung 2, 5, 6 und 9 aufweisen, die ähnlich einer Außenbackenbremse ausgebildet ist und die von außen auf die Polanordnungen 2, 5, 6 und 9 einwirkt, um deren Bewegung zu limitieren.

Die Arretierung umfasst diverse Stellpositionen, sodass z. B. in einer Stellposition der Abstand zwischen einem ersten Polkörperelement N einer Polanordnung 2, 5, 6, 9 zur äußeren Mantelfläche AM geringer ist, als der Abstand zwischen einem zweiten Polkörperelement S der Polanordnung 2, 5, 6, 9 zur äußeren Mantelfläche AM.

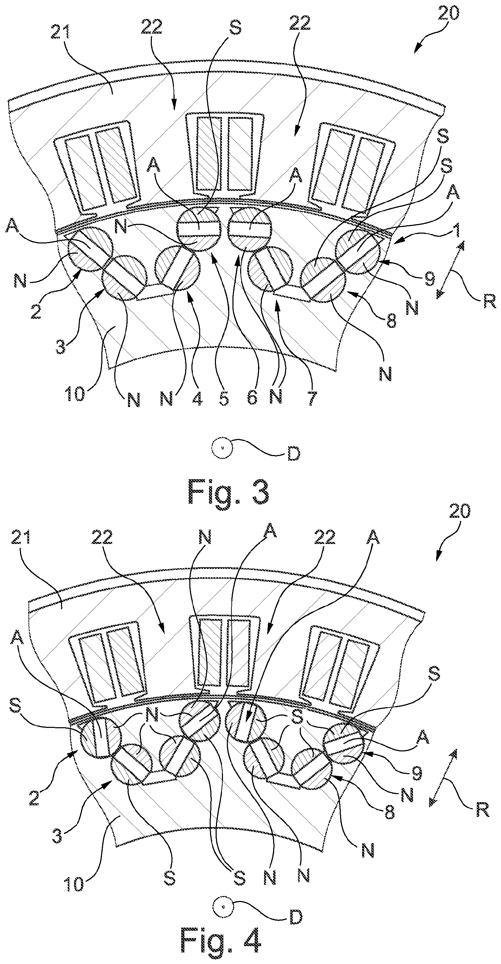

Figuren 2 bis 4 zeigen eine Schnittansicht auf eine erfindungsgemäße elektrische Maschine 20 nach einem ersten Ausführungsbeispiel.

Konkret dargestellt, ist eine elektrische Maschine 20 mit einem Rotor 1, wie bereits oben erläutert, und einem Stator 21 dargestellt, der den Rotor 1 umgibt.

Der Rotor 1 und der Stator 21 sind zueinander in radialer Richtung R beabstandet, um einen Luftspalt zwischen beiden zu bilden, wobei die elektrische Maschine 20 eine Drehachse D umfasst, um welche der Rotor 1 drehbar ist.

Ferner hat, wie bereits bekannt, der Rotor 1 einen Rotorkörper 10 und eine äußere Mantelfläche AM, die den Rotor 1 bzw. den Rotorkörper 10 begrenzt.

Ferner umfasst der Rotor 1 diverse Polanordnungen 2 9 und einen Bewegungsmechanismus für die Polanordnung 2, 5, 6, 9, wobei jede Polanordnung 2 9 einen magnetischen Pol N, S umfasst.

Auch hier ist der Bewegungsmechanismus derart ausgebildet, dass die Polanordnungen 2, 5, 6, 9 um eine Rotationsachse A des Bewegungsmechanismus bewegbar sind, die im Wesentlichen parallel zur Drehachse D des Rotors 1 orientiert ist. Dadurch sind die magnetischen Pole N, S der Polanordnungen 2, 5, 6, 9 relativ drehbar zum Stator 21 und zum Rotor 1 ausgebildet.

Des Weiteren zeigt Figur 2, dass der Stator 21 mehrere Statorpolanordnungen 22 zum Erzeugen eines magnetischen Feldes umfasst.

Im vorliegenden Ausführungsbeispiel hat der Bewegungsmechanismus eine Arretierung für die Polanordnungen 2, 5, 6, 9, wobei die Arretierung mehrere Stellpositionen umfasst.

Hierbei sind die Stellpositionen mit unterschiedlicher Orientierung des ersten Pols N und somit auch des zweiten Pols S der Polanordnungen 2, 5, 6, 9 zum Stator 21 in den Figuren 2 bis 4 sowie 6 bis 8 dargestellt.

Um die Polanordnungen 2, 5, 6, 9 von einer Stellposition in eine andere zu überführen, wird im Betrieb der elektrischen Maschine 20 innerhalb eines bestimmten Zeitintervalls von mehreren Statorpolanordnungen 22 ein elektro-magnetisches Gegenfeld zum elektro-magnetischen Feld der Polanordnungen 2, 5, 6, 9 des Rotors 1 generiert.

Dadurch wird z. B. nach dem Lösen der Arretierungen in einer ersten Stellposition ein Drehen der Polanordnungen 2, 5, 6, 9 entsprechend der von den elektromagnetischen Feldern erzeugten Kräften ermöglicht, wodurch die Polanordnungen 2, 5, 6, 9 gedreht werden und anschließend an der zweiten Stellposition mithilfe der Arretierung arretiert werden können.

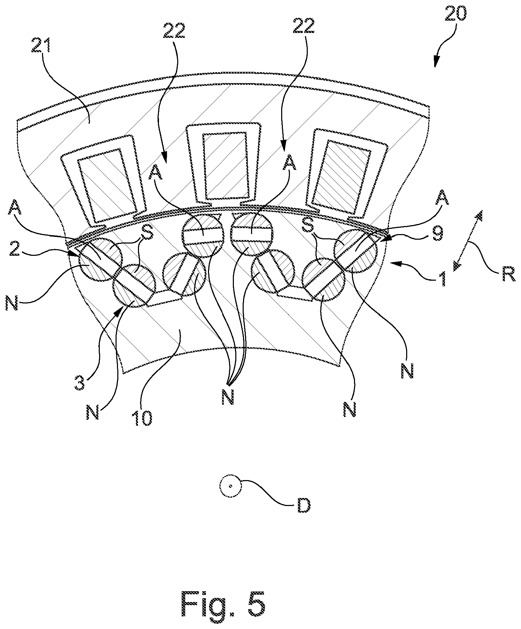

Figur 5 zeigt eine Schnittansicht auf eine erfindungsgemäße elektrische Maschine 20 nach einem zweiten Ausführungsbeispiel.

Bei Vergleich der elektrischen Maschinen 20 nach den Figuren 2 bis 4 und nach Figur 5, fällt auf, dass in Figuren 2 bis 4 jeweils ein Statorzahn mit einem angedeuteten Spulendraht umwickelt ist.

Im zweiten Ausführungsbeispiel nach Figur 5 hingegen werden von dem Spulendraht der Statorpolanordnung diverse Statorzähne umwickelt.

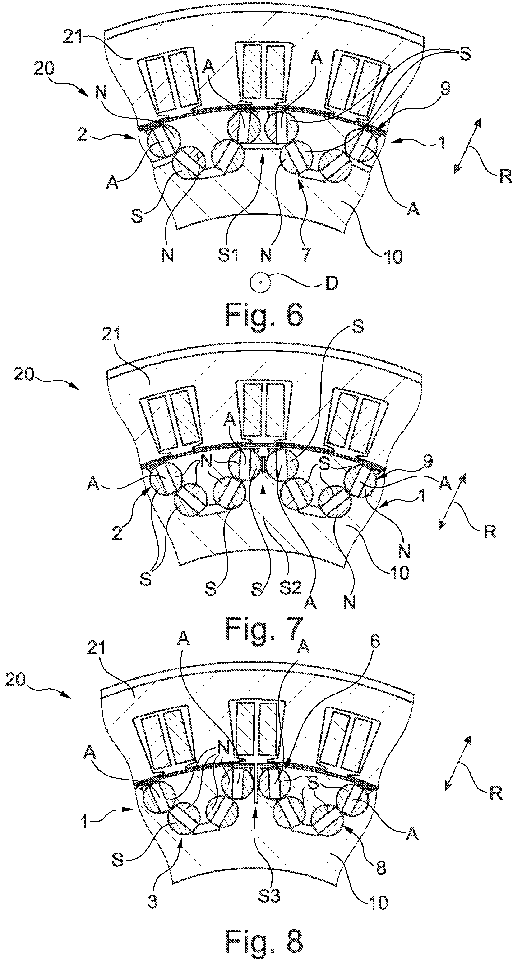

Figuren 6 bis 8 zeigen eine Schnittansicht auf eine erfindungsgemäße elektrische Maschine 20 nach dem ersten Ausführungsbeispiel mit einem Rotor 1 nach einem zweiten Ausführungsbeispiel.

Im Gegensatz zum Rotor 1 nach Figuren 1 bis 5 weist der Rotor 1 in Figuren 6 bis 8 eine magnetische Flusssperre S1, S2, S3 auf, die zwischen zwei Polanordnungen 5, 6 bzw. 4, 5 ,6 ,7 angeordnet ist.

Hierbei erstreckt sich die magnetische Flusssperre S1 in Umfangsrichtung U, wohingegen sich die magnetischen Flusssperren S2, S3 in radialer Richtung R erstrecken.

### Bezugszeichenliste

- 1: Rotor
- 2: Polanordnung
- 3: Polanordnung
- 4: Polanordnung
- 5: Polanordnung
- 6: Polanordnung
- 7: Polanordnung
- 8: Polanordnung
- 9: Polanordnung
- 10: Rotorkörper

- 20: Elektrische Maschine
- 21: Stator
- 22: Statorpolanordnung

- A: Rotationsachse des Bewegungsmechanismus sowie Rotationsachse einer Polanordnung
- AM: äußere Mantelfläche
- D: Drehachse
- N: erster / magnetischer Pol
- R: radiale Richtung
- S: zweiter / magnetischer Pol
- T: tangentiale Richtung
- U: Umfangsrichtung
- X: axiale Richtung

## Patentansprüche

1. Rotor (1) einer elektrischen Maschine (20), der aufweist:
einen Rotorkörper (10),
eine Drehachse (D), welche sich in axiale Richtung (X) erstreckt und um welche der Rotorkörper (10) drehbar ist,
eine äußere Mantelfläche (AM), die den Rotorkörper (10) begrenzt,
mindestens eine Polanordnung (2,5,6,9), und
einen Bewegungsmechanismus für die mindestens eine Polanordnung (2,5,6,9), wobei
der Bewegungsmechanismus derart ausgebildet ist, dass die mindestens eine Polanordnung (2,5,6,9) bewegbar um ihre Rotationsachse (A) ist, die im Wesentlichen parallel zu der Drehachse (D) des Rotors (1) orientiert ist, wodurch die mindestens eine Polanordnung (2,5,6,9) zusätzlich zu der Rotation um die Drehachse (D) des Rotors (1) auch um ihre Rotationsachse (A) bewegbar ist,
die mindestens eine Polanordnung (2,5,6,9) eine symmetrisch ausgebildete Gestalt aufweist, deren geometrischer Schwerpunkt und deren Massenschwerpunkt zusammenfallen, um eine Drehung um ihre Rotationsachse (A) zu ermöglichen,
**dadurch gekennzeichnet, dass**
mindestens drei Polanordnungen (2 - 9) vorgesehen sind, die eine V-förmige Anordnung oder eine Speichenanordnung bilden, und
die mindestens drei Polanordnungen (2 - 9) unterschiedliche Abstände zu der äußeren Mantelfläche (AM) des Rotors (1) aufweisen, und
lediglich die beiden Polanordnungen (2,5,6,9) mit einem geringsten Abstand zu der äußeren Mantelfläche (AM) um ihre Rotationsachse (A) bewegbar sind.

2. Rotor nach Anspruch 1, wobei
der Bewegungsmechanismus einen Aktuator zum Bewegen der mindesten einen Polanordnung (2,5,6,9) aufweist, und
der Bewegungsmechanismus einen hydraulisch oder pneumatisch betreibbaren Aktuator oder einen elektrischen Aktuator aufweist.

3. Rotor nach Anspruch 1 oder 2, wobei
der Bewegungsmechanismus eine Arretierung für die mindestens eine Polanordnung (2,5,6,9) aufweist,
die Arretierung eine erste und eine zweite Stellposition aufweist, und
in einer Stellposition der Abstand zwischen einem ersten Polkörperelement (N,S) der mindestens einen Polanordnung (2,5,6,9)zu der äußeren Mantelfläche (AM) geringer ist als der Abstand zwischen einem zweiten Polkörperelement (S,N) der mindestens einen Polanordnung (2,5,6,9) zu der äußeren Mantelfläche (AM).

4. Rotor nach einem der Ansprüche 1 bis 3, wobei
der Bewegungsmechanismus hohlzylindrisch ausgebildet ist, um die mindestens eine Polanordnung (2,5,6,9) in seinem Inneren aufzunehmen,
der Bewegungsmechanismus eine eigene Drehachse aufweist,
der Bewegungsmechanismus eine Lagereinheit aufweist, mit welcher die mindestens eine Polanordnung (2,5,6,9) frei drehbar ist und in welcher ein magnetisches, magnetisierbares oder nicht-magnetisches Polkörperelement mindestens einen Polanordnung (2,5,6,9) drehbar aufnehmbar ist, und
der Bewegungsmechanismus rotationssymmetrisch zu seiner Rotationsachse (A) ausgebildet ist.

5. Rotor nach einem der Ansprüche 1 bis 4, wobei
die mindestens eine Polanordnung (2,5,6,9) als drehbarer Stab ausgebildet ist,
die mindestens eine Polanordnung (2,5,6,9) eine kreisförmige Querschnittsfläche umfasst, und
die mindestens eine Polanordnung (2,5,6,9) aus zwei Polkörperelementen (N, S) gebildet wird, die hälftig die Gestalt der mindestens einen Polanordnung (2,5,6,9) bilden.

6. Rotor nach einem der Ansprüche 1 bis 5, wobei
der Rotor (1) eine magnetische Flusssperre (S1, S2, S3) aufweist,
die magnetische Flusssperre (S1, S2, S3) zwischen zwei Polanordnungen (2 9) angeordnet ist, und
sich die magnetische Flusssperre (S1, S2, S3) in radialer Richtung (R) oder in Umfangsrichtung (U) erstreckt.

7. Elektrische Maschine (20) mit einem Rotor (1) nach einem der Ansprüche 1 bis 6 und einem Stator (21), der den Rotor (1) umgibt, wobei
der Rotor (1) und der Stator (21) zueinander in radialer Richtung (R) beabstandet sind, um einen Luftspalt zwischen beiden zu bilden,
die elektrische Maschine (20) die Drehachse (D) aufweist, um welche der Rotor (1) drehbar ist,
die Polanordnung (2-9) einen magnetischen oder magnetisierbaren Pol (N, S) aufweist, und
der Bewegungsmechanismus derart ausgebildet ist, dass der magnetische oder magnetisierbare Pol (N, S) der mindestens einen Polanordnung (2,5,6,9) relativ drehbar zu dem Stator (21) und zu dem Rotor (1) ausgebildet ist.

8. Elektrische Maschine nach Anspruch 7, wobei
der Stator (21) eine Statorpolanordnung (22) zum Erzeugen eines magnetischen Feldes aufweist,
der Bewegungsmechanismus eine Arretierung für die mindestens einen Polanordnung (2,5,6,9) aufweist,
die Arretierung eine erste und eine zweite Stellposition aufweist,
in der ersten Stellposition ein erster Pol (N) der mindestens einen Polanordnung (2,5,6,9) zu dem Stator (21) orientiert ist, und
in der zweiten Stellposition ein zweiter Pol (S) der mindestens einen Polanordnung (2,5,6,9) zu dem Stator (21) orientiert ist,
innerhalb eines bestimmbaren Zeitintervalls von der Statorpolanordnung (22) ein elektro-magnetisches Gegenfeld zu einem elektro-magnetischen Feld der Polanordnung (2-9) des Rotors (1) generierbar ist, um nach Lösen der Arretierung in der ersten Stellposition ein Drehen der mindestens einen Polanordnung (2,5,6,9) entsprechend von den elektro-magnetischen Feldern erzeugten Kräften zu ermöglichen, wodurch die mindestens einen Polanordnung (2,5,6,9) in die zweite Stellposition drehbar und anschließend arretierbar ist.

## Claims

1. A rotor (1) of an electric machine (20), which has:
a rotor body (10),
an axis of rotation (D) which extends in the axial direction (X) and around which the rotor body (10) can be rotated,
an outer lateral surface (AM) which delimits the rotor body (10),
at least one pole arrangement (2, 5, 6, 9), and
a movement mechanism for the at least one pole arrangement (2, 5, 6, 9), wherein
the movement mechanism is designed in such a way that the at least one pole arrangement (2, 5, 6, 9) is movable about its axis of rotation (A), which is oriented substantially parallel to the axis of rotation (D) of the rotor (1), whereby the at least one pole arrangement (2, 5, 6, 9) can also be moved about its axis of rotation (A) in addition to rotating about the axis of rotation (D) of the rotor (1),
the at least one pole arrangement (2, 5, 6, 9) has a symmetrically designed shape, the geometric centre of gravity and centre of mass of which coincide to allow rotation about its axis of rotation (A),
**characterized in that**
at least three pole arrangements (2-9) are provided, forming a V-shaped arrangement or a spoke arrangement, and
the at least three pole arrangements (2-9) have different distances from the outer lateral surface (AM) of the rotor (1), and
only the two pole arrangements (2, 5, 6, 9) with the smallest distance from the outer lateral surface (AM) can be moved about their axis of rotation (A).

2. The rotor according to claim 1, wherein
the movement mechanism has an actuator for moving the at least one pole arrangement (2, 5, 6, 9), and
the movement mechanism has a hydraulically or pneumatically operated actuator or an electrical actuator.

3. The rotor according to claim 1 or 2, wherein
the movement mechanism has a locking device for the at least one pole arrangement (2, 5, 6, 9),
the locking device has a first and a second setting position, and
in a setting position, the distance between a first pole body element (N, S) of the at least one pole arrangement (2, 5, 6, 9) and the outer lateral surface (AM) is smaller than the distance between a second pole body element (S, N) of the at least one pole arrangement (2, 5, 6, 9) and the outer lateral surface (AM).

4. The rotor according to one of claims 1 to 3, wherein
the movement mechanism is designed as a hollow cylinder in order to receive the at least one pole arrangement (2, 5, 6, 9) in its interior,
the movement mechanism has its own axis of rotation,
the movement mechanism has a bearing unit with which the at least one pole arrangement (2, 5, 6, 9) can be freely rotated and in which a magnetic, magnetizable or non-magnetic pole body element of at least one pole assembly (2, 5, 6, 9) can be rotatably received, and
the movement mechanism is designed to be rotationally symmetrical about its axis of rotation (A).

5. The rotor according to one of claims 1 to 4, wherein
the at least one pole arrangement (2, 5, 6, 9) is designed as a rotatable rod,
the at least one pole arrangement (2, 5, 6, 9) comprises a circular cross-sectional area, and
the at least one pole arrangement (2, 5, 6, 9) is formed by two pole body elements (N, S), which half form the shape of the at least one pole arrangement (2, 5, 6, 9).

6. The rotor according to one of claims 1 to 5, wherein
the rotor (1) has a magnetic flux barrier (S1, S2, S3),
the magnetic flux barrier (S1, S2, S3) is arranged between two pole arrangements (2, 9), and the magnetic flux barrier (S1, S2, S3) extends in the radial direction (R) or in the circumferential direction (U).

7. An electric machine (20) with a rotor (1) according to one of claims 1 to 6 and a stator (21), which surrounds the rotor (1), wherein
the rotor (1) and the stator (21) are spaced apart from one another in the radial direction (R) in order to form an air gap between the two,
the electric machine (20) has the axis of rotation (D) about which the rotor (1) can be rotated, the pole arrangement (2-9) has a magnetic or magnetizable pole (N, S), and
the movement mechanism is designed in such a way that the magnetic or magnetizable pole (N, S) of the at least one pole arrangement (2, 5, 6, 9) is designed to be rotatable relative to the stator (21) and to the rotor (1).

8. The electric machine according to claim 7, wherein
the stator (21) has a stator pole arrangement (22) for generating a magnetic field,
the movement mechanism has a locking device for the at least one pole arrangement (2, 5, 6, 9),
the locking device has a first and a second setting position,
in the first setting position, a first pole (N) of the at least one pole arrangement (2, 5, 6, 9) is oriented towards the stator (21), and
in the second setting position, a second pole (S) of the at least one pole arrangement (2, 5, 6, 9) is oriented towards the stator (21),
an opposing electromagnetic field to an electromagnetic field of the pole arrangement (2-9) of the rotor (1) can be generated by the stator pole arrangement (22) within a determinable time interval in order to enable, after release of the locking device in the first setting position, a rotation of the at least one pole arrangement (2, 5, 6, 9) in accordance with forces generated by the electromagnetic fields, whereby the at least one pole arrangement (2, 5, 6, 9) can be rotated into the second setting position and subsequently locked.

## Revendications

1. Rotor (1) d'une machine électrique (20), qui comporte :
un corps de rotor (10),
un axe de rotation (D) qui s'étend dans la direction axiale (X) et autour duquel le corps de rotor (10) peut tourner,
une surface d'enveloppe extérieure (AM) qui délimite le corps de rotor (10),
au moins un agencement de pôles (2, 5, 6, 9) et
un mécanisme de mouvement pour l'au moins un agencement de pôles (2, 5, 6, 9), dans lequel le mécanisme de mouvement est conçu de telle sorte que l'au moins un agencement de pôles (2, 5, 6, 9) soit mobile autour de son axe de rotation (A), lequel est orienté de manière essentiellement parallèle à l'axe de rotation (D) du rotor (1), moyennant quoi l'au moins un agencement de pôles (2, 5, 6, 9) en plus de la rotation autour de l'axe de rotation (D) du rotor (1) peut également être déplacé autour de son axe de rotation (A),
l'au moins un agencement de pôles (2, 5, 6, 9) comportant une forme symétrique dont le centre de gravité géométrique et le centre de masse coïncident pour permettre une rotation autour de son axe de rotation (A),
**caractérisé en ce que**
il est prévu au moins trois agencements de pôles (2-9) qui forment un agencement en forme de V ou un agencement en rayons et
les au moins trois agencements de pôles (2-9) comportent des distances différentes par rapport à la surface d'enveloppe extérieure (AM) du rotor (1) et
seuls les deux agencements de pôles (2, 5, 6, 9) avec la plus petite distance par rapport à la surface d'enveloppe extérieure (AM) peuvent être déplacés autour de leur axe de rotation (A).

2. Rotor selon la revendication 1, dans lequel
le mécanisme de déplacement comporte un actionneur pour déplacer l'au moins un agencement de pôles (2, 5, 6, 9) et
le mécanisme de mouvement comporte un actionneur à commande hydraulique ou pneumatique ou un actionneur électrique.

3. Rotor selon la revendication 1 ou 2, dans lequel
le mécanisme de mouvement comporte un verrou pour l'au moins un agencement de pôles (2, 5, 6, 9),
le verrou comporte une première et une seconde position de réglage et
dans une position de réglage, la distance entre un premier élément de corps polaire (N, S) de l'au moins un agencement de pôles (2, 5, 6, 9) et la surface d'enveloppe extérieure (AM) est inférieure à la distance entre un second élément de corps polaire (S, N) de l'au moins un agencement de pôles (2, 5, 6, 9) et la surface d'enveloppe extérieure (AM).

4. Rotor selon l'une quelconque des revendications 1 à 3, dans lequel
le mécanisme de mouvement est réalisé sous forme de cylindre creux pour recevoir à l'intérieur l'au moins un agencement de pôles (2, 5, 6, 9),
le mécanisme de mouvement a son propre axe de rotation,
le mécanisme de mouvement comporte une unité de palier avec laquelle l'au moins un agencement de pôles (2, 5, 6, 9) peut tourner librement et dans laquelle un élément de corps polaire magnétique, magnétisable ou non magnétique d'au moins un agencement de pôles (2, 5, 6, 9) peut être reçu de manière rotative et
le mécanisme de mouvement est conçu pour être symétrique en rotation par rapport à son axe de rotation (A).

5. Rotor selon l'une quelconque des revendications 1 à 4, dans lequel
l'au moins un agencement de pôles (2, 5, 6, 9) est réalisé sous la forme d'une tige rotative,
l'au moins un agencement de pôles (2, 5, 6, 9) comporte une section transversale circulaire et
l'au moins un agencement de pôles (2, 5, 6, 9) est formé de deux éléments de corps polaires (N, S), dont la moitié a la forme d'au moins un agencement de pôles (2, 5, 6, 9).

6. Rotor selon l'une quelconque des revendications 1 à 5, dans lequel
le rotor (1) comporte une barrière de flux magnétique (S1, S2, S3),
la barrière de flux magnétique (S1, S2, S3) est disposée entre deux agencements de pôles (2, 9) et
la barrière de flux magnétique (S1, S2, S3) s'étend dans la direction radiale (R) ou dans la direction circonférentielle (U).

7. Machine électrique (20) comprenant un rotor (1) selon l'une quelconque des revendications 1 à 6 et un stator (21) qui entoure le rotor (1), dans laquelle le rotor (1) et le stator (21) sont espacés l'un de l'autre dans la direction radiale (R) pour former un entrefer entre les deux,
la machine électrique (20) comporte l'axe de rotation (D) autour duquel le rotor (1) peut tourner,
l'agencement de pôles (2-9) comporte un pôle magnétique ou magnétisable (N, S) et
le mécanisme de mouvement est conçu de telle sorte que le pôle magnétique ou magnétisable (N, S) de l'au moins un agencement de pôles (2, 5, 6, 9) soit conçu pour pouvoir tourner par rapport au stator (21) et au rotor (1).

8. Machine électrique selon la revendication 7, dans laquelle
le stator (21) comporte un agencement de pôles de stator (22) pour générer un champ magnétique,
le mécanisme de mouvement comporte un verrou pour l'au moins un agencement de pôles (2, 5, 6, 9),
le verrou comporte une première et une seconde position de réglage,
dans la première position de réglage, un premier pôle (N) de l'au moins un agencement de pôles (2, 5, 6, 9) est orienté vers le stator (21) et
dans la seconde position de réglage, un second pôle (S) de l'au moins un agencement de pôles (2, 5, 6, 9) est orienté vers le stator (21),
dans un intervalle de temps déterminable à partir de l'agencement de pôles du stator (22), un champ électromagnétique opposé à un champ électromagnétique de l'agencement de pôles (2-9) du rotor (1) peut être généré, afin de permettre la rotation de l'au moins un agencement de pôles (2, 5, 6, 9) après que le verrou a été relâché dans la première position de réglage conformément aux forces générées par les champs électromagnétiques, moyennant quoi l'au moins un agencement de pôles (2, 5, 6, 9) peut être tourné dans la seconde position de réglage puis verrouillé.
